# EUROPÄISCHE PATENTSCHRIFT

(11) **EP 0 957 332 B1**
(45) Veröffentlichungstag und Bekanntmachung des Hinweises auf die Patenterteilung: **20.08.2008**
(21) Anmeldenummer: 99107602.7
(22) Anmeldetag: 16.04.1999
(51) Int. Cl.: G01B 5/008, G01B 5/00, G01B 7/008

(54) **Koordinatenmessgerät in Brückenbauweise**
Bridgetype co-ordinate measuring machine
Machine de mesure de coordonnées de type portique

(30) Priorität: 13.05.1998 DE 19821274
(43) Veröffentlichungstag der Anmeldung: 17.11.1999
(73) Patentinhaber: Carl Zeiss Industrielle Messtechnik GmbH, 73447 Oberkochen (DE)
(72) Erfinder: Bernhardt, Ralf, 73432 Aalen (DE); Leitenberger, Werner, 89520 Heidenheim (DE); Jacobs, Klaus, 89551 Königsbronn-Ochsenberg (DE); Woletz, Franz, 73457 Essingen (DE); Piwek, Volker, 73430 Aalen (DE)
(74) Vertreter: Henckell, Carsten

(56) Entgegenhaltungen:
- DE-A- 3 125 681
- DE-A- 3 542 766
- US-A- 4 763 420
- US-A- 4 961 267
- US-A- 5 173 613

## Beschreibung

Unsere Erfindung betrifft ein Koordinatenmeßgerät in Brückenbauweise, bei dem eine die Meßauflage überspannende Brücke auf zwei seitlich der Meßauflage befindlichen Führungen geführt ist.

Derartige Brückenmeßgeräte sind bereits seit längerem bekannt. Sie weisen üblicherweise seitlich neben der Meßauflage jeweils gegenüber der Meßauflage erhöhte Seitenteile auf, auf denen in horizontaler Richtung eine die Meßauflage überspannende Brücke beweglich geführt ist. Entlang der Brücke wiederum ist ein sogenannter Querschlitten in einer zweiten horizontalen Koordinatenrichtung beweglich geführt, wobei der Querschlitten seinerseits eine Pinole in der dritten Koordinatenrichtung vertikal beweglich führt. Am unteren Ende der Pinole befindet sich hierbei ein Taster mit dem ein auf der Meßauflage aufgespanntes Werkstück vermessen werden kann.

Derartige Brückenmeßgeräte weisen gegenüber anderen gängigen Koordinatenmeßgeräten, wie beispielsweise dem Portalmeßgerät oder dem Ständermeßgerät den besonderen Vorteil auf, daß sich im wesentlichen die Führungen deutlich oberhalb der Meßauflage befinden, so daß die Führungen gegenüber Verschmutzungen relativ gut geschützt sind. Koordinatenmeßgeräte in Brückenbauweise sind wegen dieser Eigenschaft von der Konstruktion her insbesondere für den Einsatz unter rauhen Umgebungsbedingungen, wie beispielsweise in der Fertigung konzipiert.

Dennoch werden Koordinatenmeßgeräte in Brückenbauweise trotz ihrer besonderen Vorteile relativ selten eingesetzt, weil sich in der Praxis gezeigt hat, daß sich bei stärkeren Temperaturgradienten die Seitenteile, auf denen die Brücke beweglich gelagert ist, unterschiedlich stark ausdehnen, so daß hierdurch die Führungen nicht mehr exakt horizontal ausgerichtet sind. Dies kann jedoch zu erheblichen Meßfehlern führen.

Die Druckschrift DE 35 42 766 A1 zeigt ein Koordinatenmessgerät in Stahl-Schweißkonstruktion. Das Gerät ist als Portalmessgerät aufgebaut, wobei ein den Messtisch überspannendes Portal an seitlich am Messtisch angebrachten Führungen entlang dem Messtisch beweglich gelagert ist. Eine der beiden Führungen ist hierbei gegenüber dem Messtisch durch zwei am Grundgestell angebrachten Säulen erhöht befestigt. Entlang dem Querträger des Portals, der den Messtisch überspannt ist ein Pinolenträger beweglich gelagert, der wiederum in vertikaler Richtung eine Pinole beweglich lagert. Der Querträger des Portals, das seitliche Bein des Portals, das auf einer Führung im Bereich des Grundgestells geführt ist als auch der gesamte Führungsbereich auf der dem Bein gegenüberliegenden Seite des Portals, dessen Führung erhöht gegenüber dem Grundgestell angebracht ist, sind mit einer dünnen Außenhaut überzogen, die gegenüber den jeweiligen Bauteilen leicht beabstandet befestigt ist. Hierdurch wird der Temperatureinfluss auf diese Bauteile vermindert.

Aufgabe der vorliegenden Erfindung ist es deshalb ein Koordinatenmeßgerät in Brückenbauweise vorzuschlagen, mit welchem die bezeichneten Meßfehler vermieden werden können.

Die Aufgabe wird gemäß dem kennzeichnenden Teil des Anspruches 1 gelöst.

Der Grundgedanke der Erfindung ist hierbei darin zu sehen, daß die Führungen zum Führen der Brücke auf Stützen aufliegen, die einen geringen thermischen Ausdehnungskoeffizienten aufweisen und die Stützen in wenigstens einem thermisch isolierenden Tragkörper angeordnet sind.

Ferner ist wenigstens eine der Stützen im Bereich der Führung über einen Verbinder mit dem Tragkörper verbunden, wobei der Verbinder die Stütze in vertikaler Richtung beweglich gegenüber dem Tragkörper verbindet und in wenigstens einer horizontalen Richtung unbeweglich gegenüber dem Tragkörper verbindet.

Durch die Stützen mit dem geringen thermischen Ausdehnungskoeffizienten kann hierbei erreicht werden, daß selbst bei starken Temperaturunterschieden in dem Raum, in dem das Koordinatenmeßgerät aufgestellt ist, die Unterschiede der Längenänderungen der unterschiedlichen Stützen nur sehr gering sind, so daß hierdurch die Führungen immer nahezu horizontal ausgerichtet bleiben. Durch die Anordnung der Stützen in einem thermisch isolierenden Tragkörper werden die Stützen zusätzlich durch den Tragkörper thermisch isoliert, was insbesondere eine relativ langsame Aufwärmung bzw. Abkühlung des Koordinatenmeßgerätes und damit kleine Temperaturunterschiede der Stützen zur Folge hat, so daß hierdurch die Meßfehler gleichfalls erheblich reduziert werden können.

Der thermisch isolierende Tragkörper kann hierbei aus einer Reihe von Unterschiedlichen Materialien hergestellt sein. Beispielsweise könnte ein Granitblock verwendet werden. Besonders Vorteilhaft ist der Tragkörper jedoch aus einem Mineralguß, wie beispielsweise Beton oder insbesondere Polymerbeton hergestellt.

So weist Mineralguß neben seiner thermisch-isolierenden Eigenschaft weiterhin noch eine ganze Reihe weiterer besonders vorteilhafter Eigenschaften auf, die zusätzlich genützt werden. So können beispielsweise im Mineralguß, ähnlich wie bei einer Hausinstallation, bei der Herstellung des Tragkörpers Leerrohre eingegossen werden, in denen dann elektrische Leitungen sowie Druckluftleitungen auf sehr einfache Weise verlegt werden können. Darüberhinaus weist Mineralguß sowie insbesondere Polymerbeton hervorragende schwingungsdämpfende Eigenschaften auf, die sich selbstverständlich besonders vorteilhaft auf die Meßgenauigkeit und die Meßgeschwindigkeit auswirken.

Als Material für die Stützen sind grundsätzlich eine Reihe von unterschiedlichen Materialien denkbar. So könnte es sich beispielsweise um Stützen aus CFK-Rohr handeln, welches man gemäß heutiger Technologie bereits so wickeln kann, daß es einen thermischen Längenausdehnungskoeffizienten von 0 µm/(°C m) aufweist oder beispielsweise aus Zerodur, welches ebenfalls einen sehr geringen thermischen Längenausdehnungskoeffizienten besitzt. Es hat sich jedoch herausgestellt, daß als Material zumindest für Teile der Stützen besonders vorteilhaft Invarstahl verwendet wird, der beispielsweise einen thermischen Ausdehnungskoeffizienten von ca. 1,5 µm/(°C m) aufweist.

Da der Tragkörper einen erheblich höheren thermischen Längenausdehnungskoeffizienten aufweist als die Stützen, sollten die Stützen in vertikaler Richtung gegenüber dem Tragkörper beweglich sein. Dies kann realisiert werden indem beispielsweise in einem Granitblock als Tragkörper entsprechende Bohrungen vorgesehen werden, in denen die Stützen dann jeweils angeordnet werden. Verwendet man den besonders vorteilhaften Mineralguß, so erzielt man die Beweglichkeit in vertikaler Richtung, indem die Stützen nicht unmittelbar im Mineralguß eingegossen werden, sondern indem zunächst ein Rohr, beispielsweise runden oder viereckigen Querschnitts in dem Mineralguß eingegossen wird und die Stützen dann in je einem derartigen Rohr im ausgehärteten Mineralguß, also dem Tragkörper angeordnet werden.

Beim Verfahren der Brückenmechanik treten auch Querkräfte und Momente auf. Wird beispielsweise der Querschlitten entlang der Brücke beschleunigt, so tritt hierdurch eine Querkraft auf. Wird die Brücke als Ganzes beschleunigt, so tritt hierdurch ein Moment auf, da üblicherweise nur auf einer Seite des Koordinatenmeßgerätes ein Antrieb angebracht ist. Diese Querkräfte und Momente müßten von den Stützen aufgenommen werden, was jedoch in der Praxis in Anbetracht des geringen Durchmessers und der großen Länge der Stützen zu großen elastischen Deformationen der Stützen und damit zu erheblichen Meßfehlern führen würde.

Beim erfindungsgemäßen Koordinatenmeßgerät ist wenigstens eine der Stützen im Bereich der Führung über einen Verbinder mit dem Tragkörper verbunden, wobei der Verbinder die Stütze in vertikaler Richtung beweglich gegenüber dem Tragkörper verbindet und in wenigstens einer horizontalen Richtung unbeweglich gegenüber dem Tragkörper verbindet. Hierdurch bleibt die Stütze in vertikaler Richtung gegenüber dem Tragkörper beweglich, während in wenigstens einer horizontalen Koordinatenrichtung die Querkräfte und die Momente vom Tragkörper aufgenommen werden können. Als möglicher Verbinder sind hierbei eine ganze Reihe von unterschiedlichen Lösungen denkbar. Beispielsweise könnte an der Stütze ein Stift befestigt werden, der in einer entsprechenden vertikal ausgerichteten Nut im Tragkörper eingreift. Der Stift ist damit in vertikaler Richtung entlang der Nut beweglich, während in der horizontalen Längsrichtung die Stütze starr mit dem Tragkörper verbunden wäre. Besonders vorteilhaft ist der Verbinder jedoch als gestanztes oder brenngeschnittenes und ggf. entsprechend gebogenes Blech ausgeführt, wie dies im nachfolgenden Text anhand der Figuren beschrieben werden wird.

Um dem Koordinatenmeßgerät eine hohe Steifigkeit zu verleihen, sitzen die Stützen besonders vorteilhaft auf einem Rahmen auf. Der Rahmen kann hierbei aus den unterschiedlichsten Materialien bestehen, sollte jedoch eine relativ hohe Steifigkeit aufweisen. Besonders vorteilhaft weist der Rahmen hierbei eine hohe Wärmeleitfähigkeit auf, so daß zusätzlich Temperaturunterschiede zwischen den einzelnen Stützen relativ schnell ausgeglichen werden können. Um diese Eigenschaften zu erreichen, wird der Rahmen vorteilhaft aus einem Metall gefertigt. Besonders vorteilhaft bietet sich hierzu ein Rahmen aus aneinander geschweißten Doppel-T-Stahlträgern an.

Weitere Vorteile und Weiterbildungen der Erfindung können einem bevorzugten Ausführungsbeispiel entnommen werden, das nunmehr anhand der Figuren 1 bis 8 erläutert werden wird.

In den Figuren zeigen:
- Figur 1: ein erfindungsgemäßes Koordinatenmeßgerät;
- Figur 2: wesentliche Bauteile des Koordinatenmeßgerätes gemäß Figur 1 die größtenteils im Tragkörper (5, 11, 12) des Koordinatenmeßgerätes gemäß Figur 1 angeordnet sind;
- Figur 3: Detailzeichnung des linken Seitenteils (11) des Tragkörpers (5, 11, 12) vom Koordinatenmeßgerät gemäß Figur 1;
- Figur 4: Detailzeichnung des rechten Seitenteils (12) des Tragkörpers (5, 11, 12) vom Koordinatenmeßgerät gemäß Figur 1;
- Figur 5a: Detailzeichnung eines Teils (21a') des Verbinders (21a' und 21a'');
- Figur 5b: Detailzeichnung des Verbinders (21b);
- Figur 6: Schnitt durch ein Stützenlager (19b) des Koordinatenmeßgerätes gemäß Figur 1;
- Figur 7: Schnitt durch ein Anschlußstück (20b) des Koordinatenmeßgerätes gemäß Figur 1; und
- Figur 8: Schnitt durch das Anschlußstück (20b) des Koordinatenmeßgerätes nach Figur 1 um 90 Grad gedreht gegenüber dem Schnitt nach Figur 7.

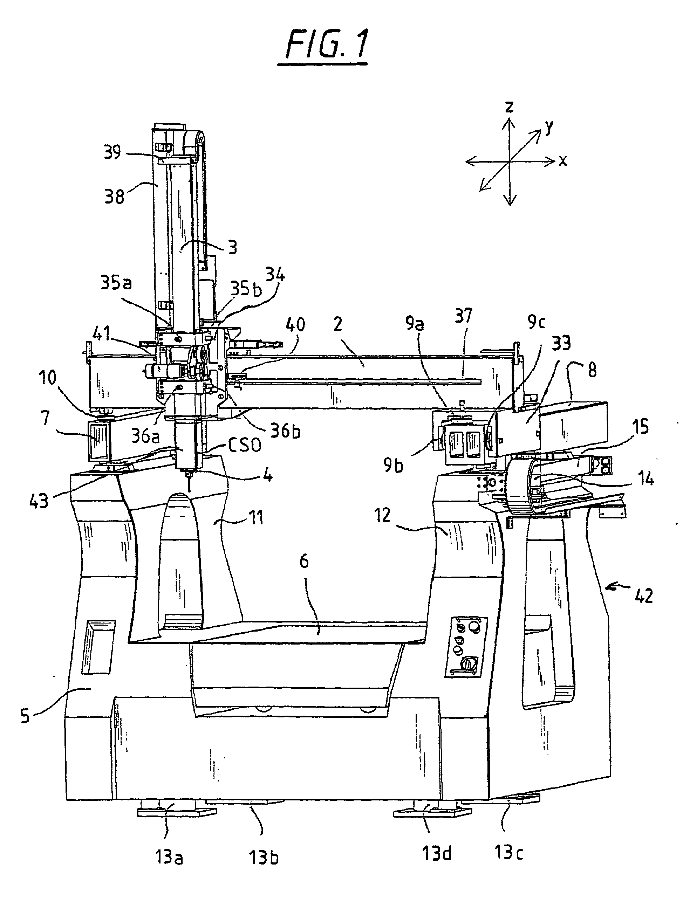

Figur 1 zeigt rein exemplarisch und beispielhaft ein Ausführungsbeispiel für ein erfindungsgemäßes Koordinatenmeßgerät in Brückenbauweise. Das Koordinatenmeßgerät (1) weist hierbei einen Unterbau (42) auf, der rein äußerlich im wesentlichen einen hier beispielhaft aus Polymerbeton gegossenen Tragkörper (5, 11, 12) mit drei Bereichen, nämlich den Seitenteilen (11 und 12) und dem Basisteil (5) aufweist, der über Dämpfer (13a-d) auf dem Boden gelagert ist. In der Mitte des Tragkörpers (5, 11, 12) befindet sich rein beispielhaft eine Meßauflage (6) in Form eines Meßtisches, auf der ein hier nicht näher gezeigtes, zu vermessendes Werkstück aufgespannt werden kann. In den Seitenteilen (11, 12) des Tragkörpers (5, 11, 12) sind hierbei in Figur 1 nicht sichtbare Stützen angeordnet, auf denen die Führungen (7, 8) befestigt sind. Wie dies im Detail aussieht, soll im nachfolgenden Text anhand der weiteren Figuren, in denen dies deutlicher zu sehen ist, noch im Detail beschrieben werden. Auf den Führungen (7, 8) ist hierbei die die Meßauflage (6) überspannende Brücke (2) beweglich geführt. Dazu sitzt die Brücke (2) über ein Luftlager (10) auf der Führung (7) auf. Auf der gegenüberliegenden Seite hingegen ist ein Halter (33) vorgesehen, in dessen vorderem Bereich drei sichtbare Luftlager (9a-c) auf der Führung (8) aufliegen bzw. anliegen, und in dessen hinterem Bereich hier nicht sichtbar ebenfalls drei Luftlager auf der Führung (8) aufliegen bzw. anliegen. Mit dem Halter (33) ist zusätzlich ein Reibradantrieb (14) verbunden. Der Reibradantrieb (14) weist im wesentlichen einen Elektromotor auf, der ein entsprechendes Reibrad antreibt, welches sich unmittelbar auf einer Lauffläche (15) abstützt, die durch ein am Tragkörper (5, 11, 12) gespanntes Band gebildet wird, und hierdurch die Brücke (2) bei einer Betätigung des Elektromotors bewegt. Zusätzlich ist unterhalb der Führung (8) ein optisch abtastbarer, nicht sichtbarer Maßstab vorgesehen, der von einem am Halter (33) befestigten, hier ebenfalls nicht zu sehenden optischen Abtastkopf abgetastet wird, so daß die genaue Position der Brücke (2) in Richtung der Führung (8) laufend erfaßt und ausgewertet werden kann. Über die so beschriebene Mechanik kann also die Brücke (2) in eine erste horizontale Koordinatenrichtung entlang des Pfeiles (Y) verfahren werden, wobei ständig die aktuelle Position der Brücke (2) in der betreffenden Richtung abgetastet werden kann.

Vollkommen analog ist der Querschlitten (34) über hier nicht näher zu sehende Luftlager auf der Brücke (2) beweglich gelagert, so daß der Querschlitten (34) in einer zweiten horizontalen Richtung, die hier durch den Pfeil (X) bezeichnet wurde, verfahren werden kann. Die aktuelle Position des Querschlittens (34) kann analog über den an der Brücke (2) befestigten Maßstab (37) und den am Querschlitten (34) befestigten optischen Abtastkopf (40) ermittelt werden, wobei der Querschlitten (34) über einen auf der Rückseite der Brücke (2) angeordneten Riemenantrieb verfahren werden kann. Die Pinole (3) mit hier beispielhaft quadratischem Querschnitt ist wiederum auf allen vier Außenseiten über insgesamt acht Luftlager (35a-d und 36a-d) (35c-d, 36c-d sind hier nicht zu sehen) beweglich gelagert, wobei die Pinole (3) über einen Reibradantrieb (41) angetrieben werden kann und die genaue Position der Pinole durch Abtasten des am Querschlitten (34) befestigten Maßstabes (38) mit dem an der Pinole befestigten optischen Abtastkopf (39) erfolgen kann. Die Pinole (3) kann somit in Richtung des mit (Z) bezeichneten Pfeiles also in der vertikalen und somit dritten Koordinatenrichtung verfahren werden.

Am unteren Ende der Pinole ist hier rein beispielhaft ein sogenannter messender Tastkopf (43) angebracht, der auswechselbar den Taster (4) aufnehmen kann. Der messende Tastkopf (43) kann hierbei die Auslenkung des Tasters (4) in den drei Koordinatenrichtungen (X, Y, Z) erfassen. Bei einer Antastung des Werkstückes kann damit über die Auslenkung des Tasters (4) aus seiner Ruhelage und über die an den Maßstäben abgetasteten Positionen der Brückenmechanik in den drei Koordinatenrichtungen (X, Y, Z) die genaue Lage eines abzutastenden Punktes auf dem Werkstück ermittelt werden.

Zu dem in Figur 1 gezeigten Koordinatenmeßgerät soll an dieser Stelle noch einmal explizit erwähnt werden, daß dieses selbstverständlich rein beispielhaft ist. Anstelle des messenden Tastkopfes kann selbstverständlich beispielsweise auch ein schaltender Tastkopf verwendet werden, bei dem ein Antastimpuls erzeugt wird, sobald der Taster (4) aus seiner Ruhelage ausgelenkt wird. Natürlich kann es sich auch um einen optischen Tastkopf handeln. Auch die Antriebe oder die Lager können vielfältig variieren. Beispielsweise können anstelle der gezeigten Antriebe auch Spindelantriebe etc. oder Gleitlager, Wälzlager etc. verwendet werden.

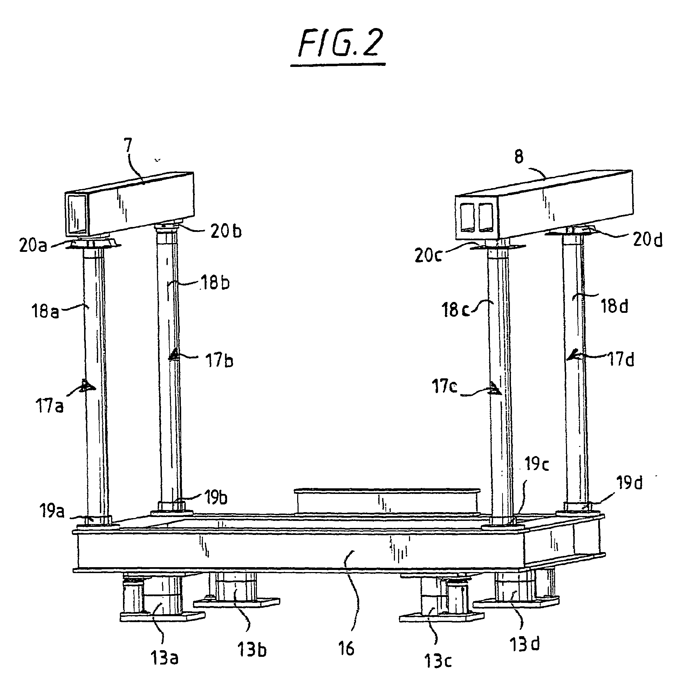

Der erfindungsgemäße Aufbau insbesondere des Unterbaus (42) soll nunmehr detailliert anhand der nachfolgenden Figuren 2-8 näher erläutert werden.

So zeigt die Figur 2 im weitesten Sinne ein Skelett des in Figur 1 gezeigten Koordinatenmeßgerätes, bei dem wesentliche Komponenten, die teilweise sogar ganz im Tragkörper (5, 11, 12) gemäß Figur 1 angeordnet sind, gesehen werden können. Wie aus Figur 2 zu sehen ist, liegen die Führungen (7, 8) auf Stützen (17a-d) auf, wobei die Stützen (17a-d) an ihrem unteren Ende Stützenlager (19a-d) aufweisen, über die, wie noch weiter unten detailliert beschrieben werden wird, die Stützen (17a-d) kippbar auf einem Rahmen (16) gelagert sind. Der Rahmen (16) besteht hierbei aus vier Doppel-T-Stahlträgern, die in ihrer Kontur zu einem entsprechenden Rechteck zusammengeschweißt wurden. Der so hergestellte Rahmen ist, wie bereits eingangs beschrieben, unmittelbar in dem Basisteil (5) des Tragkörpers (5, 11, 12) eingegossen und dient der Versteifung des Tragkörpers sowie insbesondere auch um Temperaturunterschiede zwischen den Stützen (17a-d) schnell auszugleichen. Der Rahmen (16) seinerseits ist hier beispielhaft über vier übliche Schwingungsdämpfer (13a-d) auf dem Boden gelagert. Natürlich können auch drei Schwingungsdämpfer oder mehr als vier Schwingungsdämpfer alternativ verwendet werden.

Die Stützen (17a-d) weisen neben einem noch weiter unten näher beschriebenen Anschlußstück (20a-d) zusätzlich Stangen (18a-d) auf, die in den Stützenlagern (19a-d) entsprechend kippbar gelagert sind. Die Stützen (17a-d) weisen hierbei in erfindungsgemäßer Weise einen geringen thermischen Ausdehnungskoeffizienten auf, so daß bei Temperaturunterschieden zwischen den Stützen (17a-d) nur geringe unterschiedliche Längenausdehnungen auftreten und die Führungen (7, 8) damit auch bei größeren Temperaturunterschieden nahezu horizontal ausgerichtet sind. Wie bereits eingangs erwähnt, ist als Material zumindest für die Stangen (18a-d) Invarstahl mit einem thermischen Ausdehnungskoeffizienten von ca. 1,5 µm/(°C m) besonders vorteilhaft.

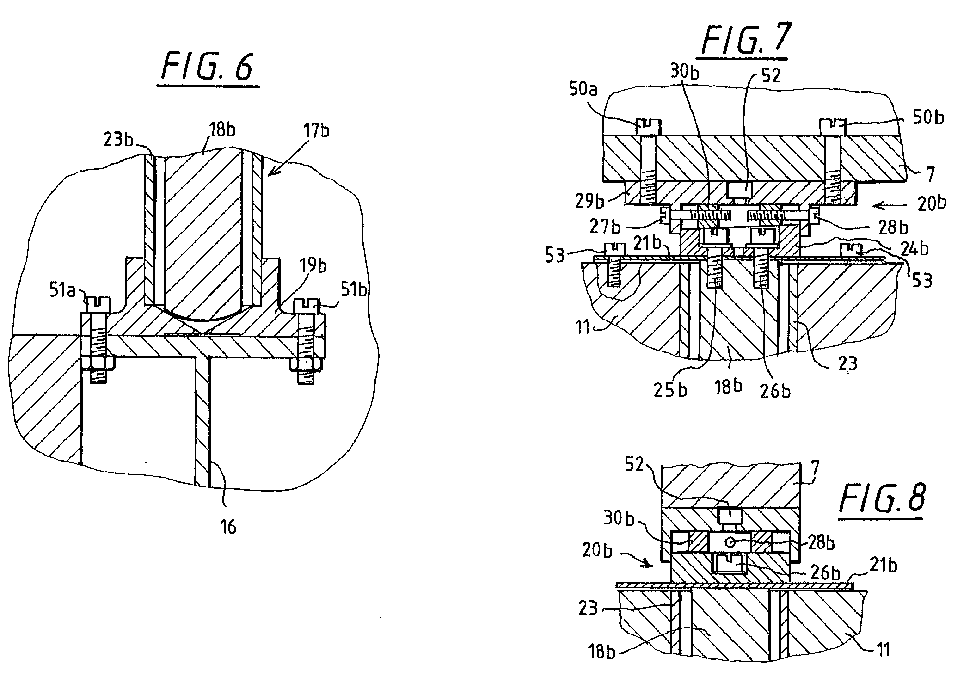

Wie bereits oben ausgeführt, sind wesentliche Teile des in Figur 2 gezeigten Skeletts im Tragkörper (5, 11, 12) angeordnet, wobei hierbei der Rahmen (16) komplett im unteren Basisteil (5) des Tragkörpers (5, 11, 12) eingegossen ist. Im Unterschied hierzu sind die Stützen (17a-d) nicht unmittelbar im Tragkörper (5, 11, 12) eingegossen, da diese in vertikaler Richtung, also der in Figur 1 mit dem Pfeil (Z) bezeichneten Richtung gegenüber dem Tragkörper frei beweglich sein müssen. Deshalb wurde in den Tragkörper, hier beispielhaft aus Polymerbeton (siehe oben), wie dies weiter unten noch im Zusammenhang mit Figuren 6 bis 8 näher bezeichnet werden wird, zunächst ein Hohlrohr (23) eingegossen, in dem die Stangen (18a-d) der Stützen (17a-d) dann nach der Fertigstellung des Tragkörpers (5, 11, 12) eingebaut werden können.

Wie bereits oben ausgeführt, treten bei der Bewegung der Brücke (2) und des Querschlittens (34) (vgl. Figur 1) Querkräfte und Momente auf, die bedingt durch die spezielle Form der Lagerung im wesentlichen durch die Führung (8) und damit natürlich durch die darunterliegenden Stützen (17c und 17d) aufgenommen werden müssen. Die Querkräfte in X- und Y-Richtung und die Momente um die Z-Richtung werden insbesondere deshalb auf die Führung (8) übertragen, da der Halter (33) U-förmig ausgebildet ist und sich über vier Lager auf den vertikalen Seiten der Führung (8) abstützt, während bei der Führung (7) an den vertikalen Flächen überhaupt kein Lager angreift.

Die Querkräfte und die Momente in der X-Y-Ebene können jedoch schlecht nur von den Stützen (17a-d) allein aufgenommen werden, da diese, wie bereits oben ausgeführt, kippbar auf dem Rahmen (16) gelagert sind. Selbst wenn jedoch die Stützen (17a-d) fest mit dem Rahmen verbunden wären, würde bedingt durch den geringen Durchmesser der Stangen (18a-d) der Stützen (17a-d) und die große Länge der Stangen eine erhebliche elastische Verformung der Stangen auftreten, so daß ein großer Meßfehler entstehen würde.

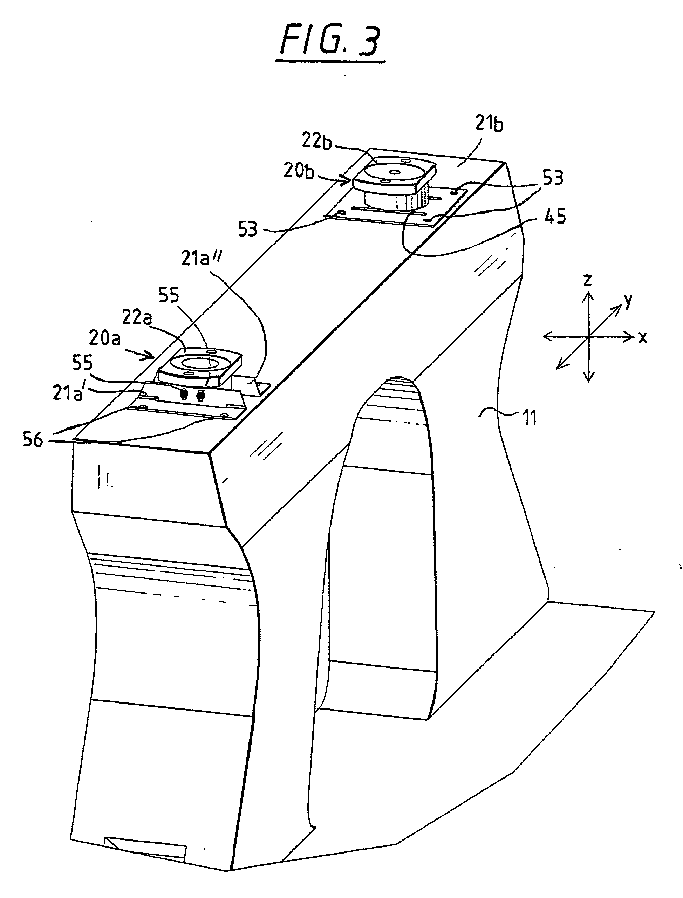

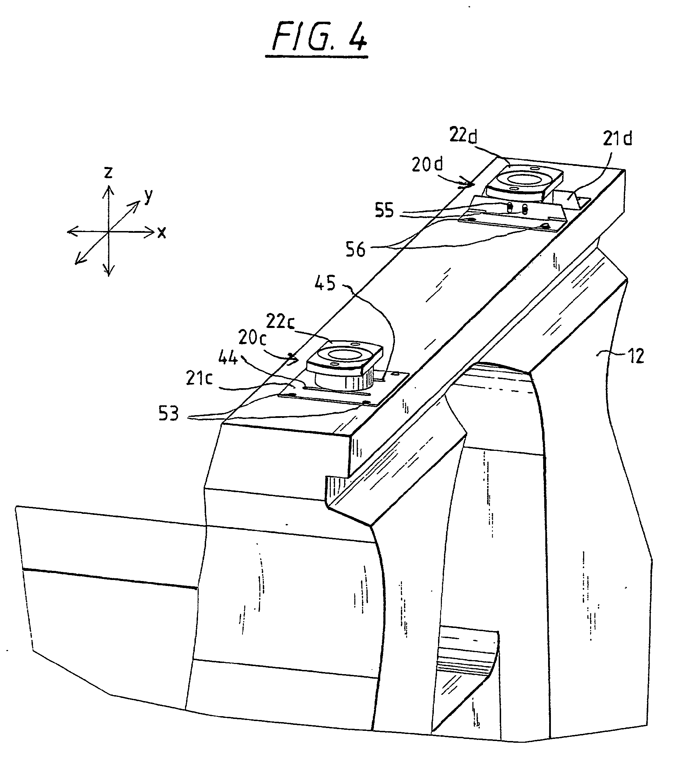

Deshalb werden, wie nachfolgend im Zusammenhang mit Figuren 3 und 4 beschrieben, die Stützen im Bereich der Führung über Verbinder (21a-d) mit dem Tragkörper (5, 11, 12) verbunden, wobei die Verbinder (21a-d) die Stützen in vertikaler Richtung, also der in Figur 1 mit dem Pfeil (Z) bezeichneten Richtung, beweglich gegenüber dem Tragkörper (5, 11, 12) verbinden und in wenigstens einer horizontalen Richtung, also der in Figur 1 mit Pfeil (X) und/oder (Y) bezeichneten Richtung, unbeweglich gegenüber dem Tragkörper verbinden.

Hierbei wird in Figur 3 das linke Seitenteil (11) des Tragkörpers (5, 11, 12) gezeigt. Das Anschlußstück (20a) der Stütze (17a) ist hierbei über einen zweiteiligen Verbinder (21a' und 21a'') derart mit dem Seitenteil (11) verbunden, daß das Anschlußstück (20a) der Stütze (17a) in vertikaler Richtung, also in der mit Pfeil (Z) bezeichneten Richtung, beweglich gegenüber dem Seitenteil (11) des Tragkörpers (5, 11, 12) verbunden ist und gleichzeitig das Anschlußstück (20a) auch in der mit Pfeil (Y) bezeichneten Richtung beweglich gegenüber dem Tragkörper verbunden ist. In der mit dem Pfeil (X) bezeichneten horizontalen Richtung hingegen ist das hier von der Stütze (17a) nur zu sehende Anschlußstück (20a) unbeweglich gegenüber dem Tragkörper (5, 11, 12).

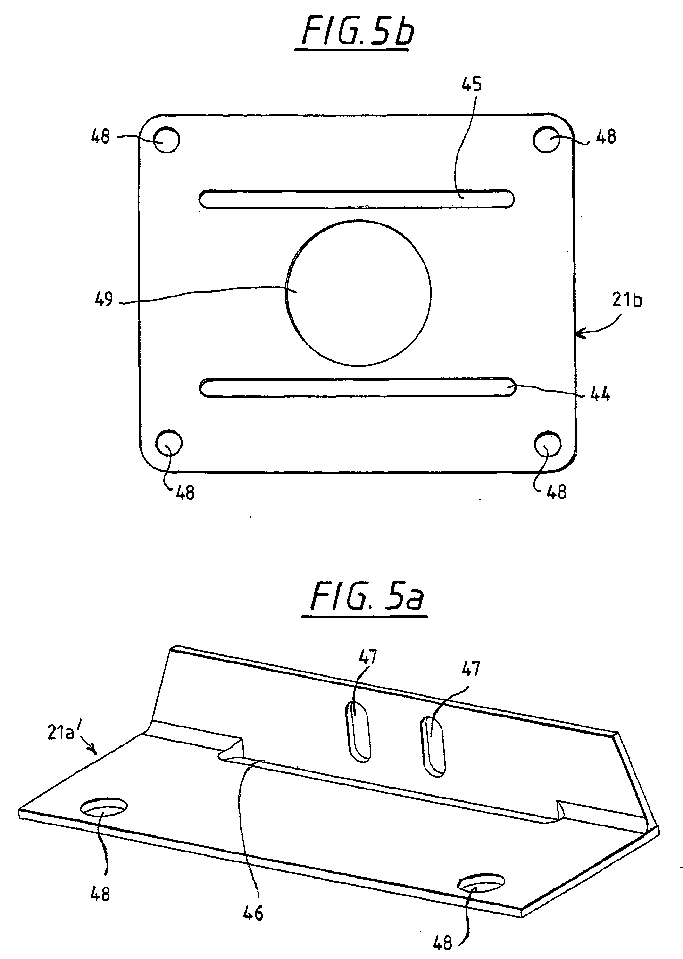

Die Herstellung des zweiteiligen Verbinders (21a'und 21a'') soll für eines der beiden identisch aufgebauten Teile des zweiteiligen Verbinders (21a'und 21a'') anhand von Figur 5a beschrieben werden. Figur 5a zeigt eine perspektivische Ansicht eines Teiles (21a') des zweiteiligen Verbinders (21a'und 21a''). Zunächst werden in ein Blech die Nuten (47), die Löcher (48) und die Nut (46) eingestanzt. Danach wird das Blech im Bereich der Nut (46) rechtwinklig gebogen.

Die Montage des Verbinders (21a'und 21a'') erfolgt, wie wieder aus Figur 3 zu ersehen ist, indem die Teile des zweiteiligen Verbinders (21a'und 21a'') jeweils über Schrauben (55) durch die Nuten (47) hindurch an das Anschlußstück (20a) angeschraubt werden. Die Teile des Verbinders werden hierbei derart justiert, daß die horizontalen Flächen der Teile des Verbinders (21a'und 21a'') im mm-Bereich gegenüber dem Tragkörper beabstandet sind. Danach werden die Teile des Verbinders jeweils über Schrauben (56) durch die Löcher (48) am Tragkörper (5, 11, 12) festgeschraubt, sodaß bedingt durch die Beabstandung die Teile des Verbinders (21a'und 21a'') in der Art einer Blattfeder vorgespannt werden. Hierdurch wird die Stütze (17a) in Richtung des Stützenlagers (19a) gedrückt. Außerdem wird hierdurch die Stütze (17a) in der mit dem Pfeil (Z) bezeichneten Richtung gegenüber dem Seitenteil (11) des Tragkörpers (5, 11, 12) entkoppelt, sodaß die thermisch bedingte Längendifferenz von Tragkörper (5, 11, 12) zur Stütze (17a) sowohl kleiner wie auch größer werden kann. Hierdurch lagert der Verbinder (21a' und 21a'') die Stütze (17a) in vertikaler Richtung beweglich gegenüber dem Tragkörper (5, 11, 12). Da in die beiden Teile des Verbinders (21a'und 21a'') die Nut (46) eingestanzt wurde, befindet sich im Bereich des Anschlußstückes (20a) zwischen der vertikalen Seite des Verbinders (21a'und 21a'') und der horizontalen Seite des Verbinders (21a'und 21a'') eine Aussparung, so daß der Verbinder (20a) bei Verschiebung in Y-Richtung ebenfalls dem vertikal ausgerichteten Teil des Verbinders (21a' und 21a'') verbiegen kann, so daß das Anschlußstück (20a) somit ebenfalls in einer horizontalen Richtung, nämlich hier der mit dem Pfeil (Y) bezeichneten Richtung beweglich gegenüber dem Tragkörper (5, 11, 12) gelagert ist. Lediglich in der horizontalen, hier mit dem Pfeil (X) bezeichneten Richtung ist das Anschlußstück (20a) und somit die Stütze (17a) starr mit dem Tragkörper (5, 11, 12) verbunden.

Der Verbinder (21b) hingegen zeigt eine zweite Variante eines Verbinders, bei dem das Anschlußstück (20b) sowohl in der mit Pfeil (X und Y) bezeichneten Richtung starr mit dem Seitenteil (12) des Tragkörpers (5, 11, 12) verbunden ist. Wie hier insbesondere aus Figur 5b, die eine Aufsicht auf den Verbinder (21b) zeigt, zu sehen ist, umfaßt der Verbinder (21b) lediglich ein Blech, in das zwei Längsnuten (44, 45), vier Löcher (48) und ein Loch (49) eingestanzt wurden. An den äußeren Ecken ist das Blech über Schrauben (53) durch die Löcher (48) hindurch am Seitenteil (11) des Tragkörpers (5, 11, 12) befestigt, während der Verbinder innerhalb der beiden Nuten zwischen der Stange (17b) und dem Unterteil (24b) des Anschlußstückes (20b) durch die Schrauben (25b und 26b) geklemmt ist (vgl. vorab Figur 7). Das Loch (49) ist als Durchlaß für die Schrauben (25b,26b) gedacht. Die Stütze (17b) und der Trägerkörper (5, 11, 12) sind hierbei ebenfalls so voneinander beabstandet dimensioniert, daß der Verbinder (21b) beim Festziehen der Schrauben (53) - nachdem der Verbinder (21b) an der Stütze (17b) befestigt wurde - ähnlich einer Blattfeder gespannt wird. Bei einer Bewegung des Anschlußstückes (20c) gegenüber dem Seitenteil (12) des Tragkörpers (5, 11, 12) verbiegt sich bedingt durch die Nuten (44, 45) der Verbinder (21b), so daß das Anschlußstück (20b) in der vertikalen Richtung, also der mit dem Pfeil (Z) bezeichneten Richtung gegenüber dem Tragkörper (5, 11, 12) beweglich ist. In der horizontalen Ebene und zwar sowohl in der mit (X) bezeichneten Richtung wie auch der mit (Y) bezeichneten Richtung ist der Anschlußkörper (20c) und somit die Stütze (17c) starr mit dem Tragkörper (5, 11, 12) verbunden.

Figur 4 seinerseits zeigt das rechte Seitenteil (12) des Tragkörpers (5, 11, 12). Wie hier zu sehen ist, ist ebenfalls das hier nur sichtbare Anschlußstück (20d) der Stütze (17d) mit einem zum Verbinder (21a' und 21a'') identischen Verbinder (21d'und 21d'') verbunden, und das hier nur sichtbare Anschlußstück (20c) der Stütze (17c) mit einem zum Verbinder (21c) identischen Verbinder (21a) verbunden. Hierdurch ist also das Anschlußstück (20d) und somit die Stütze (17d) in der mit Pfeil (Y und Z) bezeichneten Richtung beweglich mit dem Tragkörper verbunden ist, während die Stütze (17d) in der mit (X) bezeichneten Richtung starr mit dem Seitenteil (12) des Tragkörpers (5, 11, 12) verbunden ist. Außerdem ist das Anschlußstück (20c) und somit die Stütze (17c) in der mit Pfeil (Z) bezeichneten Richtung beweglich mit dem Tragkörper verbunden ist, während die Stütze (17c) in der mit (X und Y) bezeichneten Richtung starr mit dem Seitenteil (12) des Tragkörpers (5, 11, 12) verbunden ist.

Der detaillierte Aufbau der Stützenlager (19a-d) (vgl. Figur 2) soll nunmehr im Zusammenhang mit Figur 6 näher erläutert werden. In Figur 6 ist hierbei ein Ausschnitt des Skelettes gemäß Figur 2 im Schnitt dargestellt, wobei der Ausschnitt das Stützenlager (19b) umfaßt. Wie hierin zu sehen, liegt das Stützenlager auf dem Rahmen (16) auf und ist über Schrauben (51a, 51b) auf dem Rahmen (16) befestigt. Im Inneren des Stützenlagers ist eine kegelförmige Kalotte vorgesehen, auf der das abgerundete Ende der Stütze (17b) bzw. der Stange (18b) aufliegt. Über das derartig ausgeführte Stützenlager ist die Stütze (17b) somit kippbar auf dem Rahmen (16) gelagert, so daß bei der Montage des Koordinatenmeßgerätes problemlos die Stütze (17b) solange ausgerichtet werden kann, bis sie exakt vertikal steht. Zusätzlich ist gegenüber Figur 2 in Figur 6 noch das in Figur 2 nicht zu sehende Rohr (23b) zu sehen, in das die Stange (18b) der Stütze (17b) nachträglich nach dem Gießen des Tragkörpers (5, 11, 12) eingebracht wird. Wie hieraus ersichtlich, muß zum Gießen des Tragkörpers also zumindest der Rahmen (16), die Dämpfer (13a-d), die Stützenlager (19a-d) sowie die Rohre (23) (hier nur Rohr (23b) in Figur 6 zu sehen) in der Polymerbetonform angeordnet werden, um hierin den Tragkörper zu gießen.

Anhand von Figur 7 soll nunmehr das Anschlußstück (20b) der Stütze (17b) näher erläutert werden. Figur 7 zeigt hierbei einen Schnitt durch einen Ausschnitt des Koordinatenmeßgerätes (1) nach Figur 1, wobei hiebei das Anschlußstück (20b) geschnitten wird. Wie hierin zu sehen ist, weist der Anschlußkörper (20b) ein Unterteil (24b), ein Oberteil (29b) sowie ein zwischen Unterteil (24b) und Oberteil (29b) liegenden Ring (30b) auf. Sowohl der Ring (30b) wie auch das Unterteil (24b) sind jeweils mit einer schrägen Ebene versehen, die aufeinander aufliegen. Im Ring (30b) sind hierbei zusätzlich zwei Gewinde eingeschnitten, in die die Schrauben (27b und 28b) jeweils eingreifen können. Durch die Verstellung der Schrauben (27b, 28b) kann der Ring (30b) in horizontaler Richtung entlang der Schraubenachsen verstellt werden. Befindet sich der Ring (30b) mehr in Richtung der Schraube (27b), so senkt sich das Oberteil (29b) gegenüber dem Unterteil (24b) bedingt durch die schräge Ebene entsprechend ab. Verschiebt der Ring (30b) hingegen in Richtung der Schraube (28b), so wird das Oberteil (29b) gegenüber dem Unterteil (24b) entsprechend der schrägen Ebene angehoben. Diesen Mechanismus weist nur die Stütze (17b) bzw. deren Anschlußstück (20b) auf, so daß wenigstens eine Stütze über eine Höhenverstellung (24b, 27b, 28b, 30b) höhenverstellbar ist und als Höhenverstellung ein verstellbarer Keil verwendet wird.

Das Unterteil ist hierbei über die Schrauben (25b, 26b) auf dem Stab (18b) befestigt, wobei zwischen Unterteil und Stab (18b), wie bereits oben erläutert, der Verbinder (21b) eingeklemmt ist.

Figur 8 zeigt ebenfalls einen Schnitt durch einen Ausschnitt des Koordinatenmeßgerätes (1) nach Figur 1, bei dem das Anschlußstück (20b) geschnitten wird, wobei der Schnitt gegenüber der Darstellung nach Figur 7 um 90° gedreht ist. Wie hieraus ersichtlich, liegt der Ring (30b) hierbei tatsächlich auf dem Unterteil (24b) auf, wobei das Unterteil (24b) lediglich mittig eine Nut zur Aufnahme der Schrauben (25b, 26b) aufweist, in deren Bereich der Ring (30b) nicht auf dem Unterteil (24b) aufliegt. Der Ring (30b) kann durch spannen der Schrauben (25b,26b) fixiert werden. Alternativ kann der verbleibende Hohlraum im Anschlußstück (20b) auch nach der geeigneten Justierung des Ringes (30b) durch die Einfüllöffnung (52) mit einem Kleber aufgefüllt werden, sodaß die gewählte Einstellung dann fixiert wird.

## Patentansprüche

1. Koordinatenmeßgerät (1) in Brückenbauweise, bei dem eine die Meßauflage (6) überspannende Brücke (2) auf zwei seitlich der Meßauflage befindlichen Führungen (7, 8) geführt ist, wobei die Führungen (7, 8) auf Stützen (17a-d) aufliegen, die einen geringen thermischen Ausdehnungskoeffizienten aufweisen und die Stützen in wenigstens einem thermisch isolierenden Tragkörper (5, 11, 12) angeordnet sind, wobei wenigstens eine der Stützen im Bereich der Führung über einen Verbinder (21a' und 21a'', 21c, 21d' und 21d'') mit dem Tragkörper (5, 11, 12) verbunden ist, wobei der Verbinder (21a' und 21a'', 21c, 21d' und 21d'') die Stütze in vertikaler Richtung (Z) beweglich gegenüber dem Tragkörper verbindet und in wenigstens einer horizontalen Richtung (X) unbeweglich gegenüber dem Tragkörper verbindet.

2. Koordinatenmeßgerät nach Anspruch 1, wobei wenigstens eine der Stützen an ihrem unteren Ende auf einem Rahmen (16) gelagert ist.

3. Koordinatenmeßgerät nach Anspruch 1 oder 2, wobei wenigstens eine der Stützen über ein Stützenlager (19a-d) kippbar gelagert ist.

4. Koordinatenmeßgerät nach Anspruch 3, wobei das Stützenlager eine kegelförmige Kalotte aufweist, auf der das abgerundete Ende der Stütze gelagert ist.

5. Koordinatenmeßgerät nach Ansprüchen 2 bis 4, wobei der Rahmen (16) aus Metall, sowie insbesondere aus Stahl gefertigt ist.

6. Koordinatenmeßgerät nach Anspruch 1, wobei zumindest Teile der Stützen aus Invarstahl gefertigt sind.

7. Koordinatenmeßgerät nach Anspruch 1, wobei der Verbinder ein gestanztes oder brenngeschnittenes Metallblech ist.

8. Koordinatenmeßgerät nach Anspruch 2, wobei der Rahmen (16) über Dämpfer (13a-d) auf dem Boden gelagert ist.

9. Koordinatenmeßgerät nach Anspruch 1, wobei wenigstens eine der Stützen über eine Höhenverstellung (27b, 28b, 30b) höhenverstellbar ist.

10. Koordinatenmeßgerät nach Anspruch 9, wobei die Höhenverstellung einen verstellbaren Keil aufweist.

11. Koordinatenmeßgerät nach Anspruch 1, wobei die Stützen in je einem Rohr (23a-d) im Tragkörper angeordnet sind.

12. Koordinatenmeßgerät nach Anspruch 1 bis 11, wobei der Tragkörper (5,11,12) aus Mineralguß, sowie insbesondere aus Polymerbeton hergestellt ist.

13. Koordinatenmeßgerät nach Anspruch 12, wobei der Rahmen (16) im Tragkörper (5, 11, 12) eingegossen ist.

## Claims

1. Bridge-type co-ordinate measuring machine (1), in which a bridge (2) spanning the measurement base (6) is guided on two guides (7, 8) which are located laterally of the measurement base, wherein the guides (7, 8) rest on supports (17a-d) which have a low coefficient of thermal expansion, and the supports are arranged in at least one thermally insulating carrier body (5, 11, 12), wherein at least one of the supports is connected to the carrier body (5, 11, 12) in the region of the guide via a connector (21a' and 21a", 21c, 21d' and 21d"), wherein the connector (21a' and 21a'', 21c, 21d' and 21d") connects the support in the vertical direction (Z) such that it can move with respect to the carrier body and connects it in at least one horizontal direction (X) such that it cannot move with respect to the carrier body.

2. Co-ordinate measuring machine according to Claim 1, wherein at least one of the supports is mounted at its lower end on a frame (16).

3. Co-ordinate measuring machine according to Claim 1 or 2, wherein at least one of the supports is mounted via a support bearing (19a-d) such that it can tilt.

4. Co-ordinate measuring machine according to Claim 3, wherein the support bearing has a conical depression on which the rounded end of the support is mounted.

5. Co-ordinate measuring machine according to Claims 2 to 4, wherein the frame (16) is made of metal, and in particular of steel.

6. Co-ordinate measuring machine according to Claim 1, wherein at least parts of the supports are made of invar steel.

7. Co-ordinate measuring machine according to Claim 1, wherein the connector is a punched or flame-cut metal sheet.

8. Co-ordinate measuring machine according to Claim 2, wherein the frame (16) is mounted on the bottom via dampers (13a-d).

9. Co-ordinate measuring machine according to Claim 1, wherein at least one of the supports is vertically adjustable by way of a height-adjustment mechanism (27b, 28b, 30b).

10. Co-ordinate measuring machine according to Claim 9, wherein the height-adjustment mechanism has an adjustable wedge.

11. Co-ordinate measuring machine according to Claim 1, wherein the supports are arranged in each case in one pipe (23a-d) in the carrier body.

12. Co-ordinate measuring machine according to Claim 1 to 11, wherein the carrier body (5, 11, 12) is made from cast mineral and in particular from polymer concrete.

13. Co-ordinate measuring machine according to Claim 12, wherein the frame (16) is cast in place in the carrier body (5, 11, 12).

## Revendications

1. Appareil de mesure de coordonnées (1) de type portique, dans lequel un portique (2) surmontant le support de mesure (6) est guidé sur deux guides (7, 8) disposés de part et d'autre du support de mesure, les guides (7, 8) reposant sur des montants (17a-d) qui présentent un faible coefficient de dilatation thermique, et les montants étant disposés dans au moins un corps porteur (5, 11, 12) isolant thermique,
au moins l'un des montants étant connecté dans la région du guide par le biais d'un connecteur (21a' et 21a", 21c , 21d' et 21d'') au corps porteur (5, 11, 12), le connecteur (2la' et 21a" , 21c, 21d' et 21d ") connectant les montants dans la direction verticale (Z) de manière mobile par rapport au corps porteur et dans au moins une direction horizontale (X) de manière immobile par rapport au corps porteur.

2. Appareil de mesure de coordonnées selon la revendication 1, dans lequel au moins l'un des montants est monté sur son extrémité inférieure sur un cadre (16).

3. Appareil de mesure de coordonnées selon la revendication 1 ou 2, dans lequel au moins l'un des montants est monté de manière à pouvoir basculer par le biais d'un support de montant (19a-d).

4. Appareil de mesure de coordonnées selon la revendication 3, dans lequel le support de montant présente une calotte sphérique sur laquelle l'extrémité arrondie du montant est supportée.

5. Appareil de mesure de coordonnées selon les revendications 2 à 4, dans lequel le cadre (16) est fabriqué en métal, ainsi que notamment en acier.

6. Appareil de mesure de coordonnées selon la revendication 1, dans lequel au moins certaines parties des montants sont fabriquées en acier Invar.

7. Appareil de mesure de coordonnées selon la revendication 1, dans lequel le connecteur est une tôle métallique estampée ou découpée à la flamme.

8. Appareil de mesure de coordonnées selon la revendication 2, dans lequel le cadre (16) est supporté sur le sol par le biais d'amortisseurs (13a-d).

9. Appareil de mesure de coordonnées selon la revendication 1, dans lequel au moins l'un des montants peut être réglé en hauteur par le biais d'un réglage en hauteur (27b, 28b, 30b).

10. Appareil de mesure de coordonnées selon la revendication 9, dans lequel le réglage en hauteur présente une clavette réglable.

11. Appareil de mesure de coordonnées selon la revendication 1, dans lequel les montants sont disposés chacun dans un tube (23a-d) dans le corps porteur.

12. Appareil de mesure de coordonnées selon les revendications 1 à 11, dans lequel le corps porteur (5, 11, 12) est fabriqué en fonte minérale, et notamment en béton polymère.

13. Appareil de mesure de coordonnées selon la revendication 12, dans lequel le cadre (16) est coulé dans le corps porteur (5, 11, 12).
